# FASCICULE DE BREVET EUROPEEN

(11) **EP 1 022 591 B1**
(45) Date de publication et mention de la délivrance du brevet: **02.01.2003**
(21) Numéro de dépôt: 00400139.2
(22) Date de dépôt: 20.01.2000
(51) Int. Cl.: G02B 6/16

(54) **Fibre optique photosensible comprenant un filtre à réseau de Bragg et dispositif correcteur de dispersion chromatique et de pente de dispersion chromatique comprenant une telle fibre**
Lichtempfindliche optische Faser mit Bragg-Gitterfilter und Vorrichtung zur Kompensation der chromatischen Dispersion und des chromatischen Dispersionsgradients mit einer solchen Faser
Photosensitive optical fiber with Bragg grating filter, and chromatic dispersion and chromatic dispersion slope compensation device with such a fibre

(30) Priorité: 25.01.1999 FR 9900759
(43) Date de publication de la demande: 26.07.2000
(73) Titulaire: ALCATEL, 75008 Paris (FR)
(72) Inventeur: Riant, Isabelle, 91120 Palaiseau (FR); Sansonetti, Pierre, 91120 Palaiseau (FR)
(74) Mandataire: Smith, Bradford Lee

(56) Documents cités:
- EP-A- 0 668 514
- EP-A- 0 784 217
- WO-A-94/00784
- FR-A- 2 779 237
- OTHONOS A: "FIBER BRAGG GRATINGS" REVIEW OF SCIENTIFIC INSTRUMENTS, vol. 68, no. 12, 1 décembre 1997 (1997-12-01), pages 4309-4341, XP000726311 ISSN: 0034-6748
- PATENT ABSTRACTS OF JAPAN vol. 199, no. 703, 31 mars 1997 (1997-03-31) -& JP 08 286055 A (SUMITOMO ELECTRIC IND LTD), 1 novembre 1996 (1996-11-01)
- PATENT ABSTRACTS OF JAPAN vol. 199, no. 703, 31 mars 1997 (1997-03-31) -& JP 08 286050 A (SUMITOMO ELECTRIC IND LTD), 1 novembre 1996 (1996-11-01)
- DELEVAQUE E ET AL: "OPTICAL FIBER DESIGN FOR STRONG GRATINGS PHOTOIMPRINTING WITH RADIATION MODE SUPPRESSION" OPTICAL FIBER COMMUNICATION. SUMMARIES OF PAPERS PRESENTED AT THE CONFERENCE OFC '95, SAN DIEGO, FEB. 26 - MAR. 3, 1995, 1 janvier 1995 (1995-01-01), pages 343-346, XP000575468 INSTITUTE OF ELECTRICAL AND ELECTRONICS ENGINEERS ISBN: 0-7803-2654-7
- LASO M A G ET AL: "Third order dispersion compensation of linearly chirped Bragg gratings" CONFERENCE PROCEEDINGS. LEOS'98. 11TH ANNUAL MEETING. IEEE LASERS AND ELECTRO-OPTICS SOCIETY 1998 ANNUAL MEETING (CAT. NO.98CH36243), CONFERENCE PROCEEDINGS. LEOS'98. 11TH ANNUAL MEETING. IEEE LASERS AND ELECTRO-OPTICS SOCIETY 1998 ANNUAL MEETING, OR, pages 327-328 vol.2, XP002137248 1998, Piscataway, NJ, USA, IEEE, USA ISBN: 0-7803-4947-4
- ZHANG A ET AL: "LINEARLY AND NONLINEARLY CHIRPED BRAGG GRATINGS FABRICATED ON CURVED FIBERS" OPTICS LETTERS,US,OPTICAL SOCIETY OF AMERICA, WASHINGTON, vol. 20, no. 10, 15 mai 1995 (1995-05-15), pages 1122-1124, XP000512184 ISSN: 0146-9592
- ERDOGAN T: "FIBER GRATING SPECTRA" JOURNAL OF LIGHTWAVE TECHNOLOGY,US,IEEE. NEW YORK, vol. 15, no. 8, 1 août 1997 (1997-08-01), pages 1277-1294, XP000720450 ISSN: 0733-8724

## Description

Le domaine de l'invention est celui de télécommunications sur fibre optique. L'invention concerne une fibre photosensible pour la fabrication d'un filtre à réseau de Bragg, ainsi que la méthode de fabrication d'une telle fibre. Le filtre obtenu utilisant cette fibre est particulièrement adapté pour compenser des effets de dispersion chromatique et de pente de dispersion chromatique dans une liaison par fibre optique, sans introduire une dispersion de modes de polarisation pénalisante.

Les effets de la dispersion chromatique sont cumulés sur la longueur de la liaison, et sont de ce fait plus importants pour les liaisons longues. D'autre part, la dispersion chromatique provoque un élargissement temporel des impulsions à véhiculer sur la liaison. Si ces impulsions sont suffisamment espacées dans le temps, le risque d'erreur au récepteur, dû à cet élargissement, est moindre. En revanche, pour des systèmes à très haut débit, l'élargissement temporel peut devenir comparable à l'espacement entre impulsions, induisant ainsi la possibilité d'un taux d'erreur inacceptable pour l'opérateur de la liaison.

Dans une liaison pratique, telle que déployée actuellement, viennent s'ajouter les effets de la dispersion de modes de polarisation, connue sous l'acronyme anglophone "PMD" (polarisation mode dispersion), qui introduisent un autre élargissement d'impulsions.

Il devient donc important, dans des liaisons longues à haut débit, de corriger périodiquement la dispersion chromatique, tout en minimisant le PMD.

Il est connu de l'art antérieur, notamment par le document D1 = Laming, R.1. et al., "Dispersion compensating fibre Bragg gratings", Proc. WFOPC - Workshop on Fiber Optics Passive Components, University of Pavia, 18-19 Sept. 1998, pp. 108-116, une fibre à réseau de Bragg (FBG en anglais) "chirpé" pour la compensation de la dispersion chromatique. On peut également se référer aux documents suivants sur la compensation de la dispersion :
D2 = Loh, W.H. et al., : "Dispersion compensated 10 Gbit/s transmission over 700 km of standard single mode fibre with 10 cm chirped fiber grating and duobinary transmitter," Proc. OFC '96, paper PD 30, San Jose CA, USA, 1996.
D3= Cole, M.C. et al., "Broadband dispersion compensating chirped fiber Bragg gratings in 10 Gbit/s NRZ 110 km non-dispersion shifted fibre fink operating at 1.55 µm," Electron. Lett. V.33 (1) pp. 70-71, 1977.

Le document D1 enseigne l'utilisation d'un FBG à chirp quadratique pour compenser la pente de dispersion (cf. p. 114 ). Pour créer le réseau de Bragg avec les caractéristiques voulues à l'intérieur de la fibre, le coeur est d'abord chargé avec un dopant qui rend la fibre photosensible. Des variations d'indice de réfraction sont ensuite induites le long de la fibre, par l'irradiation à l'aide d'une lumière ultraviolette (UV) de la fibre à travers un masque de phase, selon une méthode classique. Les différents paramètres de fabrication auxquels on s'intéresse sont donc :
- La composition et la concentration des dopants photosensibles ;
- La longueur d'onde, l'intensité (ou puissance) lumineuse, et le temps d'exposition, de la lumière ultraviolette;
- La forme (contraste, espacement, etc.) du masque de phase.

Selon ce document D1, le masque de phase est uniforme, et la longueur d'onde réfléchie par le réseau de Bragg est modifiée selon la longueur de la fibre dans la région à exposer. Une variation linéaire de la longueur d'onde le long de la fibre peut être utilisée pour corriger la dispersion chromatique de deuxième ordre (classiquement désignée la dispersion chromatique). Une variation quadratique de la phase (inversement proportionnelle à la longueur d'onde) selon la longueur de la fibre peut être utilisée pour corriger la dispersion chromatique de troisième ordre (la pente de dispersion).

Toutefois, la méthode enseignée par le document D1 est d'une mise en oeuvre problématique et semble peu adaptée à un procédé à l'échelle industrielle. En outre, une structure fine de variations dans le temps de groupe selon la longueur d'onde à été observée. Des effets incontrôlés tels des fluctuations de la fibre et des vibrations mécaniques ont pour résultat un bruit quasi interférométrique. Malgré des faibles pertes différentielles dépendantes de la polarisation ("PDL" en anglais), une dispersion différentielle de délai de groupe (DGD, autrement connu sous le nom anglais PMD pour polarisation mode dispersion) a été observée, attribuée par les auteurs à la biréfringence de la fibre hôte. Cette biréfringence est attribuable soit à des déformations de la fibre (contraintes, ellipticité,...), soit à l'irradiation UV.

Dans le document D4 = Williams, J.A.R. et al., "Fiber Bragg Grating fabrication for dispersion slope compensation", IEEE Photonics Tech. Lett. 8(9) pp. 1187-1189, sept. 1996, une autre méthode de réalisation d'un correcteur de pente de dispersion est enseignée. Selon D4, une fibre photosensible est irradiée en deux étapes : d'abord un réseau linéaire à pas constant est photo inscrit dans le coeur de la fibre à l'aide d'un masque de phase uniforme ; ensuite, sans masque, une deuxième irradiation est effectuée à puissance constante, mais à vitesse variable le long de la fibre. La variation de vitesse a pour but de varier le temps d'exposition, et donc l'énergie lumineuse délivrée, afin de modifier la variation de l'indice photo induite. Le résultat est que l'indice moyen varie le long de la fibre, donc la longueur d'onde de Bragg varie de la même manière le long de la fibre. Cette méthode a permis d'obtenir un dispositif correcteur de pente de dispersion chromatique dans une faible largeur de bande, de l'ordre de 0.7 nm. En revanche, pour la réalisation de dispositifs ayant une largeur de bande utile plus grande, des problèmes techniques de contrôle de procédé surgissent : alignement et point focal du laser sur le coeur de la fibre, contrôle de l'accélération et de la vitesse du déplacement de la fibre, et cetera.

Le document D5 = Othonos, A: « Fiber Bragg Gratings », Review of Scientific Instruments, v. 68, no. 12, décembre 1997 (1997-12-01), pp. 4309-4391, donne une synthèse des connaissances de l'époque sur le sujet des fibres à réseau de Bragg. Le document D6 = EP 0 668 514 A2 décrit un fibre à réseau de Bragg dopée au Fluor.

L'invention a pour but de pallier les problèmes connus de l'art antérieur dans la réalisation d'un filtre correcteur de pente de dispersion à réseau de Bragg, ainsi que les problèmes, en terme de performances, des filtres ainsi réalisés.

A ces fins, l'invention propose une fibre optique photosensible comprenant un filtre à réseau de Bragg, ledit réseau de Bragg étant réalisé dans le coeur de ladite fibre photosensible par l'irradiation lumineuse de manière à créer une succession de variations photo induites quasi périodique, avec une période voisine de ΔL, d'indice de réfraction optique Δnₗ le long (z) de ladite fibre; ledit réseau de Bragg ayant en outre une variation δL(z) de ladite période ΔL le long (z) de ladite fibre ; ladite variation δL(z) de ladite période ΔL étant une variation linéaire ou quadratique selon la longueur (z) de ladite fibre ; ladite fibre optique comprenant un coeur et une gaine, ledit coeur de ladite fibre ayant un indice de réfraction n_{c}, et ladite gaine de ladite fibre ayant un indice de réfraction n_{g}, ledit coeur comprenant un dopage d'un premier élément photosensible, ledit premier élément étant le Germanium, et ledit coeur comprenant en outre un dopage d'un deuxième élément photosensible ou non afin d'abaisser l'indice de réfraction n_{c} du coeur de manière à réduire la différence d'indice de réfraction à une valeur inférieure à :
Δn = n_{c}- n_{g} ≤ 6.10⁻³, caractérisé en ce que ledit deuxième élément n'augmente pas la photosensibilité dudit coeur de ladite fibre.

Une variation linéaire est apte à corriger au moins la dispersion chromatique de deuxième ordre ; une variation quadratique peut corriger la dispersion chromatique de troisième ordre (la pente de dispersion).

Selon une caractéristique, les variations d'indice de réfraction optique Δnₗ sont fortes : Δnₗ ≥ 3.10⁻⁴. Selon une autre caractéristique, ladite variation δL(z) de ladite période ΔL est une variation linéaire selon la longueur (z) de ladite fibre. Une variation linéaire de la période, avec des fortes variations d'indice, procure une correction de dispersion chromatique de troisième ordre (pente de dispersion).

Selon une variante, la gaine de ladite fibre comprend également un dopage dudit premier élément photosensible Ge. Selon une autre caractéristique, un troisième élément photosensible ou non est ajouté dans la gaine afin de réduire la différence d'indice Δn = n_{c}- n_{g} ≤ 6 10⁻³ , toujours dans le but d'obtenir une faible PMD . Selon différentes réalisations :
- ledit deuxième élément de dopage est le Fluor ;
- ledit troisième élément de dopage est le Fluor ;
- ledit troisième élément de dopage est le Bore.

D'autres caractéristiques et avantages de l'invention ressortiront de la description détaillée qui suit, avec ses dessins annexés, dont :
- La figure 1 montre schématiquement un exemple d'une pente de dispersion à corriger ;
- La figure 2 montre schématiquement un exemple d'une fibre optique selon une caractéristique de l'invention, ayant un réseau de Bragg photo inscrite avec une variation linéaire du pas du réseau ("chirp" linéaire) ; en outre le réseau est présent dans la gaine de la fibre ;
- La figure 3 montre schématiquement un exemple d'une réponse de temps de groupe linéaire obtenu classiquement avec un filtre selon la figure 2, quand les variations d'indice photo induites Δnₗ sont normales, de l'ordre de Δnₗ ≈ 10⁻⁴ ;
- La figure 4 montre schématiquement un exemple d'une réponse de temps de groupe quadratique obtenu avec un filtre selon la figure 2, mais avec des fortes variations d'indice photo induites Δnₗ ≥ 3. 10⁻⁴ (ici 6.10⁻⁴);
- La figure 5 montre schématiquement un exemple d'un profil d'indice de réfraction obtenu avec un fort dopage en Ge dans le coeur de la fibre selon l'invention, C_{Ge} ≥ 10 % , sans co-dopant;
- La figure 6 montre schématiquement un exemple d'un profil d'indice de réfraction obtenu avec un fort dopage en Ge dans le coeur de la fibre selon l'invention, C_{Ge} ≥ 10 % , avec co-dopant.

Sur toutes les figures, les mêmes repères désignent les mêmes éléments, mais l'échelle n'est pas toujours respectée pour des raisons de clarté.

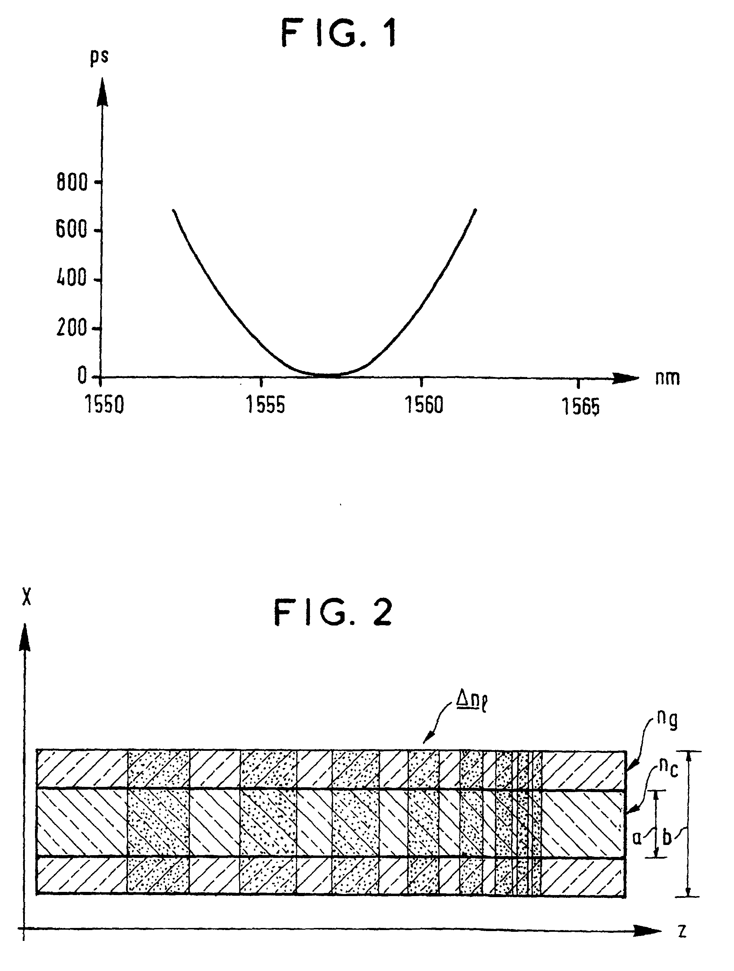

Sur la figure 1, on voit un exemple d'une dispersion chromatique à corriger, telle que l'on pourrait l'observer dans un répéteur dans une liaison optique à très longue distance. Une telle liaison est typiquement composée d'une pluralité de tronçons de fibre optique qui relient une pluralité de stations ou répéteurs, dans lesquels les signaux à propager sont périodiquement amplifiés et remis en forme avant d'être transmis dans un autre tronçon. Comme on a pu constater à la lecture des documents cités plus haut, il est connu d'utiliser des filtres à réseau de Bragg pour effectuer la correction de la dispersion chromatique, voire de la pente de cette dispersion. Si cette correction est réussie, la variation du temps de groupe avec la longueur d'onde telle que montrée sur la figure 1 est annulée, c'est à dire que le temps de groupe sera le même pour toutes les longueurs d'onde de la bande utile de transmission.

La figure 2 montre schématiquement un exemple d'une fibre optique selon une caractéristique de l'invention, ayant un réseau de Bragg photo inscrit avec une variation linéaire du pas du réseau ("chirp" linéaire). Classiquement, un filtre à réseau de Bragg avec ce chirp linéaire peut être utilisé pour corriger la dispersion chromatique du deuxième ordre. La fibre optique guidant comprend un coeur de diamètre a ayant une indice de réfraction n_{c}, et une gaine ayant une indice de réfraction n_{g}. Pour être guidant, une valeur typique de la différence d'indice optique Δn = n_{c} - n_{g} ≈ 5.10⁻³ est courante. Des plus fortes différences d'indice peuvent être obtenues, mais il est connu que la biréfringence de forme de la fibre varie proportionnellement à cette différence élevée au carrée, ∝ (Δn)² et la biréfringence de contrainte proportionnellement ∝ (Δn). D'autre part il a été montré que la PMD du compensateur de dispersion était proportionnel à la biréfringence de la fibre. Il est donc souhaitable de n'introduire qu'une différence (Δn) faible pour éviter de dégrader le signal par l'effet de PMD.

Sur la figure 2 l'on voit également les variations d'indice photo induites Δnₗ. Leur espacement moyen ΔL détermine la longueur d'onde de Bragg du filtre. De facon exagérée sur la figure 2, nous avons montré schématiquement une variation du pas de réseau δL(z) le long de la fibre, z. Selon une réalisation particulièrement avantageuse de l'invention, cette variation δL(z) est une fonction linéaire de la position z le long de la fibre, et la variation d'indice de réfraction photo induite est relativement forte : Δnₗ ≥ 3. 10⁻⁴ Dans ce cas, le filtre de Bragg obtenu est apte à corriger non seulement la dispersion chromatique de deuxième ordre, mais aussi, de façon inattendue, celle de troisième ordre

Cette forte variation d'indice peut être obtenue, soit en augmentant l'exposition. à la lumière ultraviolette, en augmentant le temps d'exposition, par exemple ; soit en augmentant la photosensibilité du coeur. en ajoutant une plus forte concentration de dopant photosensible. Une augmentation du temps d'exposition donne lieu à des problèmes de réalisation liées à la précision de l'instrumentation pour la livraison du faisceau lumineux, et notamment à la stabilité dans le temps de celui-ci. Cette forte variation d'indice est obtenue par un dopage en forte concentration de Germanium dans le coeur, C_{Ge} ≥ 10 %.

Mais l'introduction d'une plus forte concentration de Ge dans le coeur change l'indice de réfraction du coeur, et peut augmenter de ce fait la biréfringence et donc la dispersion de modes de polarisation de façon pénalisante pour la liaison. Pour éviter ces conséquences néfastes d'une augmentation de la concentration de Ge dans le coeur, et l'augmentation de la différence d'indice An entre le coeur et la gaine de la fibre, selon une variante préférée de l'invention, ledit coeur comprend en outre un dopage d'un deuxième élément photosensible ou non afin d'abaisser l'indice de réfraction n_{c} du coeur de manière à réduire la différence d'indice à une valeur normale, par exemple Δn = n_{c}- n_{g} ≤ 6.10⁻³.

Selon une réalisation particulière de l'invention, telle que montrée sur la figure 2, la gaine de la fibre est aussi photosensible, et le réseau de Bragg s'étend dans la gaine. Cette technique permet de s'affranchir d'un couplage vers les modes de gaine, qui entrainerait des pertes d'insertion du filtre. Comme dans le cas précèdent, on peut également ajouter un autre dopant photosensible ou non pour obtenir une fibre guidante mais de faible biréfringence : Δn = n_{c}- n_{g} ≤ 6.10⁻³.

Deux éléments dopants non photosensibles sont proposés pour un tel dopage : le Fluor (F) et le Bore (B). D'autres dopants pourraient être utilisés.

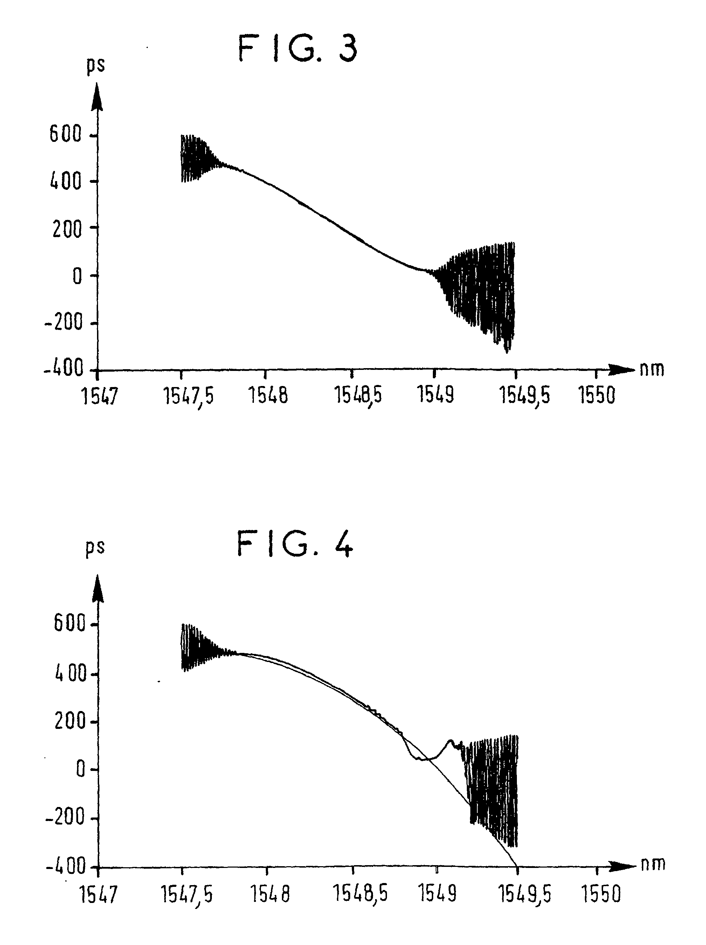

La figure 3 montre schématiquement un exemple d'une réponse linéaire obtenu classiquement avec un filtre selon la figure 2, quand les variations d'indice photo induites Δnₗ sont normales, de l'ordre de Δnₗ ≈ 10⁻⁴. On constate que le filtre de l'art antérieur, avec des variations d'indice normales, aurait un effet sensiblement linéaire en réponse de temps de groupe en fonction de la longueur d'onde.

En revanche, la figure 4 montre schématiquement un exemple d'une réponse quadratique obtenu avec un filtre selon la figure 2, mais avec des fortes variations d'indice photo induites Δnₗ ≥ 3. 10⁻⁴. On voit que l'effet quadratique qui caractérise le besoin de correction de pente de dispersion peut être obtenu uniquement avec le chirp linéaire de la figure 2, a condition que le contraste des variations d'indice photo induites soit assez fort : Δnₗ ≥ 3.10⁻⁴,

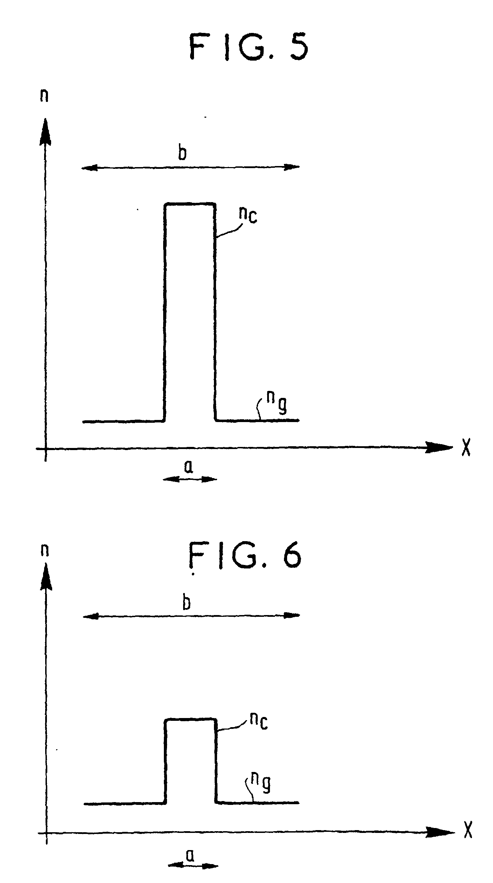

Comme expliqué plus haut par rapport à la figure 2, l'augmentation de la variation d'indice photo induite est obtenue, tout en gardant un temps d'inscription raisonnable selon une variante de l'invention, par une plus forte concentration de dopant photosensible Ge dans le coeur. Ceci a pour effet d'augmenter l'indice de réfraction du coeur, tel que montré sur la figure 5. Ceci peut être pénalisant en termes de PMD, et pour éviter cela, une variante de l'invention propose l'adjonction d'un co-dopant photosensible ou non dans le coeur afin de baisser la différence d'indice entre le coeur et la gaine : Δn = n_{c}- n_{g} ≤ 6.10⁻³. Un tel profil d'indice de réfraction est présenté sur la figure 6.

A titre d'exemple, pour un Δn de 30.10⁻³ tel que montré dans la figure 5, avec une longueur de réseau de 50 mm, une dispersion chromatique de 450 ps/nm est obtenue, mais avec une PMD de 3 ps. En revanche, quand un co-dopant est ajouté pour réduire la différence d'indice de réfraction à une valeur normale de Δn = 5,10⁻³ comme montré dans la figure 6, la même longueur de réseau (50mm) permet d'obtenir la même dispersion chromatique (450 ps/nm), mais avec un PMD beaucoup plus faible, de l'ordre de 0.25 ps.

L'invention a été décrite à l'aide de quelques exemples non limitatifs de réalisations. L'homme de l'art saura mettre en oeuvre les principes de l'invention dans ses multiples réalisations et équivalents, sans sortir pour autant du cadre de l'invention, tel que défini par les revendications qui suivent.

## Revendications

1. Fibre optique photosensible comprenant un filtre à réseau de Bragg, ledit réseau de Bragg étant réalisé dans le coeur de ladite fibre photosensible par l'irradiation lumineuse de manière à créer une succession de variations photo induites quasi périodique, avec une période voisine de ΔL, d'indice de réfraction optique Δnₗ le long (z) de ladite fibre ; ledit réseau de Bragg ayant en outre une variation δL(z) de ladite période ΔL le long (z) de ladite fibre ; ladite variation δL(z) de ladite période ΔL étant une variation linéaire ou quadratique selon la longueur (z) de ladite fibre ; ladite fibre optique comprenant un coeur et une gaine, ledit coeur de ladite fibre ayant un indice de réfraction n_{c}, et ladite gaine de ladite fibre ayant un indice de réfraction n_{g}, ledit coeur comprenant un dopage d'un premier élément photosensible, ledit premier élément étant le Germanium, et ledit coeur comprenant en outre un dopage d'un deuxième élément, photosensible ou non, afin d'abaisser l'indice de réfraction n_{c} du coeur de manière à réduire la différence d'indice de réfraction Δn=n_{c}-n_{g} à une valeur inférieure ou égale 6.10⁻³,
**caractérisé en ce que** ledit deuxième élément n'augmente pas la photosensibilité dudit coeur de ladite fibre.

2. Fibre optique selon la revendication 1, **caractérisé en ce que** les variations d'indice de réfraction optique Δnₗ sont supérieures ou égales à 3.10⁻⁴.

3. Fibre optique selon la revendication 2 , **caractérisé en ce que** ladite variation δL(z) de ladite période ΔL est une variation linéaire selon la longueur (z) de ladite fibre.

4. Fibre optique selon la revendication 1, **caractérisée en ce que** la gaine de ladite fibre comprend également un dopage dudit premier élément photosensible Ge.

5. Fibre optique selon la revendication 4 , **caractérisée en ce qu'**un troisième élément, photosensible ou non, est ajouté dans la gaine afin de réduire la différence d'indice Δn.

6. Fibre optique selon l'une quelconque des revendications 1, 4, ou 5 **caractérisée en ce que** ledit deuxième élément de dopage est le Fluor.

7. Dispositif correcteur de dispersion chromatique comprenant une fibre optique selon l'une quelconque des revendications 1 à 6.

8. Dispositif correcteur de pente de dispersion chromatique comprenant une fibre optique selon l'une quelconque des revendications 1 à 6.

## Claims

1. A photosensitive optical fiber including a Bragg grating filter, said Bragg grating being formed in the core of said photosensitive optical fiber by irradiation with light to create a quasi-periodic succession of optically induced variations of the optical refractive index Δn₁, along the length (z) of said fiber with a period close to ΔL; said Bragg grating also having a variation δL(z) of said period ΔL along the length (z) of said fiber; said variation δL(z) of said period ΔL being a linear or quadratic variation along the length (z) of said fiber; said optical fiber having a core and a cladding, said core of said optical fiber having a refractive index n_{c} and said cladding of said optical fiber having a refractive index n_{g}, said core being doped with a photosensitive first element, said first element being Germanium, and said core being further doped with a photosensitive or non-photosensitive second element to reduce the refractive index n_{c} of the core to reduce the refractive index difference Δn = n_{c} - n_{g} to a value not greater than 6 × 10⁻³, said optical fiber being **characterized in that** said second element does not increase the photosensitivity of said core of said fiber.

2. An optical fiber according to claim 1, **characterized in that** the optical refractive index variations Δn₁ are not less than 3 × 10⁻⁴.

3. An optical fiber according to claim 2, **characterized in that** said variation δL(z) of said period ΔL is a linear variation along the length (z) of said fiber.

4. An optical fiber according to claim 1, **characterized in that** the cladding of said fiber is also doped with said first photosensitive element Ge.

5. An optical fiber according to claim 4, **characterized in that** a third photosensitive or non-photosensitive element is added to the cladding to reduce the index difference Δn.

6. An optical fiber according to any of claims 1, 4 and 5, **characterized in that** said second dopant is fluorine.

7. A chromatic dispersion corrector device including an optical fiber according to any of claims 1 to 6.

8. A chromatic dispersion slope corrector device including an optical fiber according to any of claims 1 to 6.

## Patentansprüche

1. Lichtempfindliche optische Faser, die einen Filter mit Bragg-Gitter umfasst, wobei das Bragg-Gitter im Kern der lichtempfindlichen Faser durch Lichteinstrahlung erzeugt ist, um eine quasiperiodische Folge mit einer Periode nahe ΔL von lichtinduzierten Schwankungen des optischen Brechungsindex Δn₁ in Längsrichtung (z) der Faser zu erzeugen, wobei das Bragg-Gitter ferner eine Schwankung δL(z) der Periode ΔL in Längsrichtung (z) der Faser aufweist, wobei die Schwankung δL(z) der Periode ΔL eine lineare oder quadratische Schwankung in Abhängigkeit von der Länge (z) der Faser ist, wobei die optische Faser einen Kern und eine Hülle umfasst, der Kern der Faser einen Brechungsindex n_{c} hat und die Hülle der Faser einen Brechungsindex n_{g} hat, der Kern eine Dotierung mit einem ersten lichtempfindlichen Element, nämlich Germanium, aufweist, und der Kern ferner eine Dotierung mit einem zweiten lichtempfindlichen oder nicht lichtempfindlichen Element aufweist, um den Brechungsindex n_{c} des Kerns abzusenken, um so die Brechungsindexdifferenz Δn = n_{c} - n_{g} auf einen Wert von 6 x 10⁻³ oder kleiner zu verringern, **dadurch gekennzeichnet, dass** das zweite Element die Lichtempfindlichkeit des Kerns der Faser nicht erhöht.

2. Optische Faser nach Anspruch 1, **dadurch gekennzeichnet, dass** die Schwankungen des optischen Brechungsindex Δn₁ größer oder gleich 3 x 10⁻⁴ sind.

3. Optische Faser nach Anspruch 2, **dadurch gekennzeichnet, dass** die Schwankung δL(z) der Periode ΔL eine lineare Schwankung in Abhängigkeit von der Länge (z) der Faser ist.

4. Optische Faser nach Anspruch 1, **dadurch gekennzeichnet, dass** die Hülle der Faser ebenfalls eine Dotierung mit dem ersten lichtempfindlichen Element Germanium umfasst.

5. Optische Faser nach Anspruch 4, **dadurch gekennzeichnet, dass** ein drittes, lichtempfindliches oder nicht lichtempfindliches Element zur Hülle hinzugefügt ist, um die Brechungsindexdifferenz Δn zu verringern.

6. Optische Faser nach einem beliebigen der Ansprüche 1, 4 oder 5, **dadurch gekennzeichnet, dass** das zweite Dotierungselement Fluor ist.

7. Vorrichtung zur Korrektur der chromatischen Dispersion mit einer optischen Faser nach einem beliebigen der Ansprüche 1 bis 6.

8. Vorrichtung zur Korrektur des Gefälles der chromatischen Dispersion mit einer optischen Faser nach einem beliebigen der Ansprüche 1 bis 6.
